# EUROPÄISCHE PATENTSCHRIFT

(11) **EP 0 446 472 B1**
(45) Veröffentlichungstag und Bekanntmachung des Hinweises auf die Patenterteilung: **08.06.1994**
(21) Anmeldenummer: 90124999.5
(22) Anmeldetag: 20.12.1990
(51) Int. Cl.: C09B 67/00

(54) **Verfahren zur Herstellung von Perylen-3,4,9,10-tetracarbonsäurediimiden in einer coloristisch wertvollen Pigmentform**
Process for the manufacture of perylene-3,4,9,10-tetracarboxylic acid diimides in a pigmentary form with a high tinctorial value
Procédé pour la préparation de diimides de l'acide pérylène-3,4,9,10-tétracarboxylique dans une forme pigmentaire à haute valeur tinctoriale

(30) Priorität: 10.03.1990 DE 4007728
(43) Veröffentlichungstag der Anmeldung: 18.09.1991
(73) Patentinhaber: BAYER AG, 51368 Leverkusen (DE)
(72) Erfinder: Schütze, Detlef-Ingo, Dr., W-5000 Köln 80 (DE); Müller, Dietmar, W-5000 Köln 80 (DE)

(56) Entgegenhaltungen:
- EP-A- 0 039 912
- EP-A- 0 042 819
- EP-A- 0 173 927
- EP-A- 0 318 022
- DE-A- 2 612 855
- DE-A- 2 714 778
- DE-A- 3 208 192
- DE-B- 1 115 711
- DE-B- 1 142 339
- FR-A- 2 327 288

## Beschreibung

Die Erfindung betrifft ein neues Verfahren zur Herstellung von brillanten, farbstarken und leicht dispergierbaren Perylen-3,4,9,10-tetracarbonsäurediimid-Pigmenten bzw. von deren N-Alkylderivaten.

Perylen-3,4,9,10-tetracarbonsäurediimid und dessen N-Alkylderivate stellen wegen ihres hohen Echtheitsniveaus wertvolle Pigmentfarbstoffe mit außerordentlich hohem Echtheitsniveau für das Färben von Lacken und Kunststoffen dar.

Verfahren zur Herstellung von Perylen-3,4,9,10-tetracarbonsäurediimid-Pigmenten bzw. von deren N-Alkylderivaten sind seit vielen Jahren bekannt. Insbesondere wurden Verfahren entwickelt, um die bei der Synthese anfallenden farbschwachen und trüben Rohpigmente in eine coloristisch interessante Pigmentform zu überführen.

Die in der Literatur bekannten und gebräuchlichen Verfahren zur Überführung von Rohpigmenten in eine feinverteilte Pigmentform, wie beispielsweise Vermahlung mit oder auch ohne Salz in einer Kugelmühle oder Umfällen beispielsweise aus schwefelsaurer Lösung, reichen bei den Perylen-3,4,9,10-tetracarbonsäurediimid-Rohpigmenten nicht aus, da die Pigmente nach einer derartigen Behandlung in ihrer feinverteilten Form bei der Aufarbeitung und vor allem bei der Trocknung sehr stark zur Bildung von Aggregaten und Agglomeraten neigen, was mit einem Verlust an Farbstärke und insbesondere mit einer hohen Kornhärte verbunden ist.

In der Literatur sind eine Reihe von Verfahren zur Überwindung dieser angeführten Schwierigkeiten beschrieben.

So erhält man beispielsweise nach den Angaben der DE-PS 1 115 711 ein farbstarkes Pigment, wenn man den, nach einem der Feinverteilungsverfahren, wie beispielsweise Umfällen aus Schwefelsäure oder Vermahlen mit Salz in der Kugelmühle und anschließender Entfernung des Salzes mit Wasser, erhaltenen feuchten Preßkuchen des Perylen-3,4,9,10-tetracarbonsäurediimids mit einem hochsiedenden Lösungsmittel, wie beispielsweise Nitrobenzol, so lange zum Sieden erhitzt, bis das Wasser vollständig abdestilliert ist.

Auch Variationen bei der Salzvermahlung des Rohpigments wurden beschrieben, indem zur Vermahlung langkettige aliphatische Alkohole (DE-OS 1 914 208) oder langkettige aliphatische Amine (DE-OS 2 063 714) zugesetzt worden sind.

Ferner soll nach den Angaben der DE-PS 1 142 339 die Pigmentform nach der Umfällung aus Schwefelsäure erhalten bleiben, wenn das in feinverteilter Form hergestellte Perylen-3,4,9,10-tetracarbonsäurediimid mit einer öllöslichen, polaren Verbindung intensiv gemischt, getrocknet und gemahlen wird.

In der DE-OS 1 619 531 wird ein weiteres Verfahren beschrieben, wobei das Perylen-3,4,9,10-tetracarbonsäurediimid in Gegenwart von Alkoholen, Ketonen, aliphatischen oder aromatischen Kohlenwasserstoffen durch Vermahlung in eine farbstarke Pigmentform überführt werden soll.

Demgegenüber wird nach dem Verfahren der DE-OS 2 316 536 das Rohpigment zunächst in Gegenwart oder Abwesenheit von Mahlhilfsmitteln gemahlen und das Mahlgut anschließend mit Aminen, heterocyclischen Basen, Carbonsäureamiden oder mit 75 bis 84 %iger Schwefelsäure behandelt.

Aus FR-A-2 327 288 und DE-A-2 714 778 sind bereits Verfahren zur Herstellung von Ethoxyphenyl- bzw. Dimethylphenyl-substituierten Penylimiden bekannt, die im Finishing wäßrige Alhohol- oder Keton-Gemische verwenden.

Eine von den bisher angeführten Verfahren abweichende Methode wird in der DE-OS 2 837 731 und der DE-OS 2 727 484 beschrieben. Danach wird das Perylen-3,4,9,10-tetracarbonsäurediimid bzw. dessen N-Alkylderivat zunächst mit Natriumdithionit in seine Leukoform überführt und anschließend unter Einwirkung von Scherkräften in Gegenwart von oberflächenaktiven Verbindungen oder in Gegenwart von oberflächenaktiven Verbindungen und in Abwesenheit von Scherkräften oxidiert.

Die angeführten Verfahren des Standes der Technik haben entweder den Nachteil, daß sie den heutigen Anforderungen an Farbstärke und vor allem Dispergierbarkeit zur Färbung von Lacken, Druckfarben oder Kunststoffen oder neben einem hohen technischen Aufwand den heutigen ökologischen Anforderungen an die Verfahren nicht genügen.

Es wurde nun überraschend gefunden, daß man brillante, farbstarke und leicht dispergierbare Perylen,3,4,9,10-tetracarbonsäurediimide und deren N-Alkylderivate mit 1 bis 4 Kohlenstoffatomen je Alkylgruppe erhält, wenn man die Rohpigmente durch Mahlung, in Abwesenheit von organischen Lösungsmitteln, mit oder ohne Zusatz von Salzen wie beispielsweise Natriumchlorid oder Natriumsulfat, durch Salzknetung oder auch durch Umfällen aus Schwefelsäure zunächst in eine feinteilige Form bringt und diese dann nach Entfernung des Salzes durch Auswaschen mit Wasser bei der Verwendung von Salzen als Mahlhilfsmittel und nach Auswaschen der Säure mit Wasser bei Verwendung von Schwefelsäure einer Behandlung mit einem Gemisch aus Wasser und einem organischen Lösungsmittel aus der Klasse der Alkohle, Ketone, Carbonsäuren oder Carbonsäureester unterzieht und anschließend in üblicher Weise, z.B. durch Wasserwäsche oder Destillation mit oder ohne Dampf von dem organischen Lösungsmittel befreit, wobei die Anwendbarkeit dieser Methoden von den Löslichkeitseigenschaften des organischen Lösungsmittels bestimmt wird.

Von Carbonsäureestern kann das Pigment leicht durch Verseifung der Ester zu wasserlöslichen Carboxylaten befreit werden.

Die Behandlung erfolgt beispielsweise bei Temperaturen zwischen 60°C und 200°C, vorzugsweise bei Temperaturen zwischen 80°C und 150°C, gegebenenfalls unter erhöhtem Druck.

Die Behandlung erfolgt beispielsweise über einen Zeitraum von 0,5 bis 20 Stunden, vorzugsweise beträgt der Zeitraum 0,5 bis 12 Stunden.

Das durch Mahlung, Knetung oder Umfällung der Rohpigmente erhaltene Zwischenprodukt wird vorzugsweise als wäßriger Preßkuchen bei der folgenden Lösungsmittelbehandlung eingesetzt.

Zur Behandlung geeignet sind Lösungsmittel aus der Klasse der aliphatischen Alkohole vorzugsweise Alkanole mit 1 bis 10 Kohlenstoffatomen, beispielsweise Methanol, Ethanol, Propanol, Butanol, Hexanol, Decanol, Ethylenglykol oder Propylenglykol; aus der Klasse der aliphatischen und cycloaliphatischen Ketone beispielsweise Aceton, Methylethylketon oder Cyclohexanon; aus der Klasse der Ester aliphatischer Carbonsäuren, vorzugsweise der C₁-C₄-Alkylester von Alkancarbonsäuren mit 1 bis 8 Kohlenstoffatomen wie beispielsweise Ameisensäuremethylester, Ameisensäureethylester, Essigsäuremethylester, Essigsäureethylester, Essigsäurepropylester, Essigsäurebutylester, Propionsäuremethylester, Valeriansäuremethylester, Valeriansäureethylester, Adipinsäuredimethylester, Adipinsäurediethylester, Zitronensäurediethylester; aus der Klasse der Ester aromatischer Carbonsäuren, vorzugsweise der C₁-C₄-Alkylester von Benzolmono- und -dicarbonsäuren, die gegebenenfalls durch Hydroxy substituiert sind, beispielsweise C₁-C₄-Alkylester von Benzoesäure, Salicyclsäure oder Phthalsäure wie Benzoesäuremethylester, Benzoesäureethylester, Salicyclsäuremethylester, Salicylsäureethylester, Phthalsäuredimethylester oder Phthalsäurediethylester.

Besonders bevorzugt zur Lösungsmittelbehandlung sind die Benzoesäure- und Phthalsäure-C₁-C₄-alkylester, ganz besonders bevorzugt Benzoesäuremethylester und Phthalsäuredimethylester.

Die Lösungsmittelbehandlung erfolgt gegebenenfalls in Gegenwart eines Säurepuffers wie beispielsweise Natriumacetat oder Trinatriumphosphat.

Das organische Lösungsmittel sollte im Konditionierungsmedium in Mengen von mindestens 0,1 Gew.-Teilen pro Gewichtsteil trockenes Pigment anwesend sein. Dieses Verhältnis kann in weiten Grenzen schwanken und ist abhängig von der Art des jeweiligen organischen Lösungsmittels. Vorzugsweise werden 0,1 bis 100 Gew.-Teile, besonders bevorzugt 0,2 bis 50 Gew.-Teile organische Flüssigkeit pro Gewichtsteil trockenes Pigment eingesetzt.

Bei Verwendung der Ester aromatischer Carbonsäuren werden bevorzugt 0,2 bis 3 Gew.-Teile pro Gewichtsteil trockenes Pigment eingesetzt.

Vorzugsweise enthält das Behandlungsmedium weiterhin 1 bis 30 Gewichtsteile Wasser, besonders bevorzugt 3 bis 20 Gew.-Teile, ganz besonders bevorzugt 5 bis 12 Gewichtsteile Wasser pro Gewichtsteil trockenes Pigment.

Als Ausgangsmaterial werden die nach den literaturbekannten Herstellungsverfahren synthetisierten Rohpigmente eingesetzt, z.B. hergestellt durch Verschmelzen von Naphthalin-1,8-dicarbonsäureimid (B.I.O.S. Final Report Nr. 1484, S. 21, DE-OS 3 345 810), durch Verschmelzen von Acenaphthenchinon-monoxim oder -dioxim mit Alkali (DE-PS 276 357) oder durch Kondensation von Perylen-3,4,9,10-tetracarbonsäure oder ihres Anhydrids mit Ammoniak (DE-PS 386 057) oder mit Methylamin (DE-OS 2 504 481, DE-OS 2 153 087) oder durch Methylierung des Perylen-3,4,9,10-tetracarbonsäurediimids (DE-OS 2 726 682).

Es ist ferner vorteilhaft, das als Rohprodukt eingesetzt Perylen-3,4,9,10-tetracarbonsäurediimid bzw. dessen N-Alkylderivat zuvor durch Umkristallisieren aus Schwefelsäure oder durch Ausrühren mit heißer konzentrierter Schwefelsäure zu reinigen.

Die wie vorstehend beschrieben erhältlichen Perylen-3,4,9,10-tetracarbonsäurediimid-Pigmente bzw. deren N-Alkylderivate sind sehr brillante, farbstarke Pigmente und eignen sich je nach Art und Dauer der Behandlung besonders gut zur Einfärbung von Kunststoffen wie beispielsweise Polyvinylchlorid, Polyethylen oder Polypropylen, oder zur Pigmentierung beispielsweise von Einbrennlacken. Die Pigmente zeigen eine sehr gute Dispergierbarkeit, ein sehr gutes Fließverhalten im Lack und liefern brillante und farbstarke Färbungen.

Die folgenden Beispiele veranschaulichen die Erfindung, ohne sie auf Einzelheiten zu beschränken.

### Beispiel 1

15 g Perylen-3,4,9,10-tetracarbonsäurediimid wurden zusammen mit 150 g Natriumchlorid in einer Schwingmühle, die ein Volumen von 1 Liter hatte und mit 1700 g Stahlkugeln, vom Durchmesser 10-20 mm, gefüllt war, 15 Stunden gemahlen. Das Mahlgut wurde anschließend in Wasser gegeben, abgesaugt und mit Wasser Natriumchlorid-frei gewaschen. Man erhielt ca. 40 g eines wasserfeuchten Preßkuchens von feinverteiltem Perylen-3,4,9,10-tetracarbonsäurediimid.

Der feuchte Preßkuchen wurde dann mit 70 g Wasser, 0,45 g wasserfreiem Natriumacetat und 4 g Phthalsäuredimethylester versetzt und 1 Stunde bei 100°C gerührt.

Danach wurde der Phthalsäuredimethylester mit 4,5 g 50 %iger Natronlauge innerhalb von 2 Stunden bei 80°C verseift. Das Produkt wurde abgesaugt, gewaschen und getrocknet.

Man erhielt 14,6 g (97,3 % der Theorie) eines sehr gut dispergierbaren Marronpigmentes, das beispielsweise in Einbrennlaken farbstarke, brillante Einfärbungen und einen sehr gut fließfähigen Lack liefert.

### Beispiel 2

Man arbeitete analog zu Beispiel 1, setzte jedoch an Stelle des Phthalsäuredimethylesters 3,5 g Benzoesäuremethylester ein.

Es wurden 14,4 g (96 % der Theorie) des sehr gut dispergierbaren Pigmentes erhalten, das in Einbrennlacken gleich gute Eigenschaften besitzt, wie das nach Beispiel 1 erhaltene Produkt.

### Beispiel 3

Man arbeitete zunächst analog zu Beispiel 1, erhitzte dann aber den feuchten Preßkuchen nach Zugabe von 70 ml Wasser und 90 ml Methanol 5 Stunden auf 150°C im Autoklaven. Anschließend wurde das Methanol abdestilliert, das Produkt abgesaugt, gewaschen und getrocknet.

Man erhielt 14,5 g (96,7 % der Theorie) des farbstarken, brillanten Pigmentes, das ebenfalls bei der Einfärbung von Einbrennlacken einen sehr gut fließfähigen Lack liefert.

### Beispiel 4

Man arbeitete analog zu Beispiel 3, jedoch unter Einsatz von 75 ml Butanol an Stelle von Methanol und erhitzte 8 Stunden auf 140°C.

Man erhielt auf diesem Weg 14,1 g =(94 % der Theorie) an Pigment welches beispielsweise in PVC eine sehr gute Dispergierbarkeit, hohe Farbstärke und Brillanz zeigt.

### Beispiel 5

Man arbeitete analog zu Beispiel 1, setzte jedoch an Stelle von 15 g Perylen-3,4,9,10-tetracarbonsäurediimid 15 g N,N'-Dimethyl-perylen-3,4,9,10-tetracarbonsäurediimid ein.

Man erhielt 14,3 g (95,3 % der Theorie) eines farbstarken, gelbstichigen Rotpigmentes, das ebenfalls eine gute Dispergierbarkeit besitzt.

### Beispiel 6

Man arbeitete analog zu Beispiel 3, setzte jedoch an Stelle von 15 g Perylen-3,4,9,10-tetracarbonsäurediimid 15 g N,N'-Dimethyl-perylen-3,4,9,10-tetracarbonsäurediimid ein.

Das auf diesem Weg erhaltene Rotpigment (14,3 g = 95,3 % der Theorie) besitzt ebenfalls gute Dispergierbarkeit, hohe Farbstärke und Brillanz.

### Beispiel 7

15 g N,N'-Dimethyl-perylen-3,4,9,10-tetracarbonsäurediimid wurden bei Raumtemperatur in 300 ml konzentrierter Schwefelsäure gelöst. Anschließend wurde die Lösung in Eiswasser eingetragen, das Produkt abgesaugt und mit Wasser neutral gewaschen.

Der wasserfeuchte Preßkuchen wurde dann mit 70 ml Wasser, 0,45 g wasserfreiem Natriumacetat und 4 g Phthalsäuredimethylester verrührt und 2 Stunden auf 100°C erhitzt.

Danach wurde der Phthalsäuredimethylester durch Zusatz von 4,5 g 50 %iger Natronlauge innerhalb von 2 Stunden bei 80°C verseift. Das Produkt wurde abgesaugt, gewaschen und getrocknet.

Man erhielt 14,2 g (94,7 %, der Theorie) des Rotpigmentes, das farbstarke und brillante Färbungen im Einbrennlack liefert und gut dispergierbar ist.

### Beispiel 8

Man arbeitete analog zu Beispiel 7 setzte jedoch an Stelle von 15 g N,N'-Dimethyl-perylen-3,4,9,10-tetracarbonsäurediimid 15 g Perylen-3,4,9,10-tetracarbonsäurediimid ein.

Man erhielt 14,3 g (95,3 % der Theorie) des gut dispergierbaren, farbstarken und brillanten Marronpigmentes.

## Patentansprüche

1. Verfahren zur Herstellung von brillanten, farbstarken und leicht dispergierbaren Perylen-3,4,9,10-tetracarbonsäurediimiden und deren N-Alkylderivaten mit 1 bis 4 Kohlenstoffatomen je Alkylgruppe, dadurch gekennzeichnet, daß die Rohpigmente durch Mahlung, in Abwesenheit von organischen Lösungsmitteln, mit oder ohne Zusatz von Salz, durch Salzknetung oder Umfällen aus Schwefelsäure zunächst in eine feinteilige Form gebracht werden, nach Entfernung von Salz oder Schwefelsäure, einer Behandlung mit einem Gemisch aus Wasser und einem organischen Lösungsmittel aus der Klasse der Alkohole, Ketone, Carbonsäure oder Carbonsäureester unterzogen werden und anschließend in üblicher Weise von dem organischen Lösungsmittel befreit werden.

2. Verfahren gemäß Anspruch 1, dadurch gekennzeichnet, daß es bei Temperaturen zwischen 60°C und 200°C und gegebenenfalls unter erhöhtem Druck durchgeführt wird.

3. Verfahren gemäß Ansprüchen 1 und 2, dadurch gekennzeichnet, daß Gemische aus Wasser und C₁-C₄-Alkylestern aromatischer Carbonsäuren verwendet werden.

4. Verfahren gemäß Ansprüchen 1-3, dadurch gekennzeichnet, daß Benzoesäuremethylester oder Phthalsäuredimethylester verwendet wird.

5. Verfahren gemäß Ansprüchen 1-4, dadurch gekennzeicnnet, daß man das Ausgangsprodukt der Lösungsmittelbehandlung als feuchten Preßkuchen einsetzt.

6. Verfahren gemäß Ansprüchen 1-5, dadurch gekennzeichnet, daß mit 0,1 bis 100 Gew.-Teilen an organischem Lösungsmittel pro Gewichtsteil an trockenem Pigment behandelt wird.

7. Verfahren gemäß Ansprüchen 1-6, dadurch gekennzeichnet, daß das Behandlungsmedium 1 bis 30 Gew.-Teile Wasser pro Gewichtsteil an trockenem Pigment enthält.

## Claims

1. Process for the preparation of brilliant and easily dispersible perylene-3,4,9,10-tetracarboxydiimides of high colour strength and N-alkyl derivatives thereof having 1 to 4 carbon atoms per alkyl group, characterized in that the crude pigments are first brought into a finely divided form by milling in the absence of organic solvents with or without the addition of salt, by beading in the presence of salt or reprecipitation from sulphuric acid, after removal of salt or sulphuric acid are subjected to a treatment by means of a mixture of water and an organic solvent from the class of alcohols, ketones, carboxylic acid or carboxylic esters and then freed of the organic solvent in a conventional manner.

2. Process according to Claim 1, characterized in that it is carried out at temperatures between 60°C and 200°C and, if appropriate, under elevated pressure.

3. Process according to Claims 1 and 2, characterized in that mixtures of water and C₁-C₄-alkyl esters of aromatic carboxylic acids are used.

4. Process according to Claims 1-3, characterized in that methyl benzoate or dimethyl phthalate is used.

5. Process according to Claims 1-4, characterized in that the starting material of the solvent treatment is used in the form of a moist press cake.

6. Process according to Claims 1-5, characterized in that the treatment is carried out with 0.1 to 100 parts by weight of organic solvent per part by weight of dry pigment.

7. Process according to Claims 1-6, characterized in that the treatment medium contains 1 to 30 parts by weight of water per part by weight of dry pigment.

## Revendications

1. Procédé de production de diimides d'acide pérylène-3,4,9,10-tétracarboxylique brillants, de grand pouvoir colorant et faciles à disperser, et de leurs dérivés N-alkyliques ayant 1 à 4 atomes de carbone par groupe alkyle, caractérisé en ce que les pigments bruts sont tout d'abord mis sous une forme finement divisée par broyage, en l'absence de solvants organiques, avec ou sans addition de sel, par pétrissage du sel ou reprécipitation dans l'acide sulfurique, ils sont soumis, après élimination du sel ou de l'acide sulfurique, à un traitement avec un mélange d'eau et d'un solvant organique de la classe des alcools, des cétones, des acides carboxyliques ou des esters d'acides carboxyliques puis ils sont débarrassés du solvant organique d'une manière classique.

2. Procédé suivant la revendication 1, caractérisé en ce qu'il est mis en oeuvre à des températures comprises entre 60°C et 200°C et le cas échéant sous pression élevée.

3. Procédé suivant les revendications 1 et 2, caractérisé en ce qu'on utilise des mélanges d'esters d'alkyles en C₁ à C₄ d'acides carboxyliques aromatiques.

4. Procédé suivant les revendications 1 à 3, caractérisé en ce qu'on utilise l'ester méthylique d'acide benzoïque ou l'ester diméthylique d'acide phtalique.

5. Procédé suivant les revendications 1 à 4, caractérisé en ce qu'on utilise le produit de départ du traitement au solvant sous forme de tourteau humide.

6. Procédé suivant les revendications 1 à 5, caractérisé en ce qu'on effectue le traitement avec 0,1 à 100 parties en poids de solvant organique par partie en poids de pigment sec.

7. Procédé suivant les revendications 1 à 6, caractérisé en ce que le milieu de traitement contient 1 à 30 parties en poids d'eau par partie en poids de pigment sec.
